# EUROPÄISCHE PATENTSCHRIFT

(11) **EP 0 642 713 B1**
(45) Veröffentlichungstag und Bekanntmachung des Hinweises auf die Patenterteilung: **31.05.2000**
(21) Anmeldenummer: 94911060.5
(22) Anmeldetag: 22.03.1994
(51) Int. Cl.: H04B 1/16

(54) **SCHALTUNGSANORDNUNG ZUR ABLEITUNG EINES STÖRUNGEN IN EINEM EMPFANGENEN STEREO-MULTIPLEXSIGNAL ANZEIGENDEN SIGNALS**
CIRCUIT FOR DERIVING A SIGNAL INDICATING INTERFERENCE IN A RECEIVED STEREO MULTIPLEX SIGNAL
CIRCUIT POUR LA DERIVATION D'UN SIGNAL INDICATEUR D'INTERFERENCES DANS UN SIGNAL STEREO MULTIPLEX DE RECEPTION

(30) Priorität: 24.03.1993 DE 4309518
(43) Veröffentlichungstag der Anmeldung: 15.03.1995
(73) Patentinhaber: Blaupunkt-Werke GmbH, 31132 Hildesheim (DE)
(72) Erfinder: CHAHABADI, Djahanyar, D-31139 Hildesheim (DE); HERRMANN, Matthias, D-31141 Hildesheim (DE); VOGT, Lothar, D-31249 Hohenhameln (DE)
(86) Internationale Anmeldenummer: DE9400319
(87) Internationale Veröffentlichungsnummer: WO9422227

(56) Entgegenhaltungen:
- EP-A- 0 418 036
- SIGNAL PROCESSING IV: THEORIES AND APPLICATIONS, Bd.2, 8. September 1988, GRENOBLE Seiten 499 - 502, XP93955 REICH ET AL 'DIGITAL FM STEREO DEMODULATION AND DECODING'
- DIGITAL SIGNAL PROCESSING, Bd.2, Nr.1, Januar 1992, ORLANDO,FL,US Seiten 2 - 13, XP387796 BAKHRU 'Communications Receiver Design Using Digital Processing'

## Beschreibung

Die Erfindung betrifft eine Schaltungsanordnung zur Ableitung eines Störungen in einem empfangenen Stereo-Multiplexsignal anzeigenden Signals, wobei das Stereo-Multiplexsignal als digitales Signal mit einer ersten Abtastrate vorliegt, welche wesentlich größer als das Doppelte der oberen Grenze des Nutzfrequenzbereichs des Stereo-Multiplexsignals ist.

Spektralanteile oberhalb des Nutzfrequenzbereichs eines Stereo-Multiplexsignals bedeuten Störungen beim Empfang des Stereo-Multiplexsignals, welche sich meistens ohne weitere Maßnahmen auch als hörbare Störungen in den wiedergegebenen Audiosignalen bemerkbar machen. So senden beispielsweise Zündfunken von Brennkraftmaschinen kurze Hochfrequenzimpulse innerhalb eines weiten Frequenzbereichs aus, die zu obengenannten Spektralanteilen im Stereo-Multiplexsignal führen. Insbesondere für Autoradios sind daher Schaltungsanordnungen bekanntgeworden, welche in Abhängigkeit vom Auftreten derartiger Spektralanteile die Audiosignale in geeigneter Weise beeinflussen, beispielsweise eine vor dem Auftreten der Störung vorhandene Amplitude kurzzeitig beibehalten.

Aufgabe der vorliegenden Erfindung ist es, eine Schaltungsanordnung anzugeben, welche die Spektralanteile des Multiplexsignals, die Störungen anzeigen, in günstiger Weise gewinnt, wobei insbesondere die Belange einer digitalen Signalverarbeitung zu berücksichtigen sind - beispielsweise ein möglichst geringer Bedarf an Rechenleistung.

Diese Aufgabe wird erfindungsgemäß dadurch gelöst, daß das empfangene Stereo-Multiplexsignal über ein Hochpaßfilter geleitet wird und daß das hochpaßgefilterte Stereo-Multiplexsignal einer Dezimation auf eine zweite Abtastrate unterworfen wird, die größer als das Doppelte der oberen Grenze des Nutzfrequenzbereichs des Stereo-Multiplexsignals ist.

Die erfindungsgemäße Schaltungsanordnung hat den Vorteil, daß das die Störungen anzeigende Signal im wesentlichen den oben beschriebenen Spektralanteilen entspricht, jedoch einen niedrigeren Frequenzbereich einnimmt. Dadurch ist einerseits eine weitere Verarbeitung mit einer niedrigeren Abtastrate möglich. Andererseits kann dieses Signal entsprechend den Erfordernissen der jeweils anschließenden Schaltungen weiterverarbeitet werden, da es die wesentlichen Charakteristiken der oben genannten Spektralanteile enthält. So kann beispielsweise ein mit der erfindungsgemäßen Schaltungsanordnung abgeleitetes Signal zur Unterdrückung von Störungen, die durch Zündfunken bedingt sind, eine Schaltung zur vorübergehenden Speicherung der Amplitude des Audiosignals steuern. Ein mit der erfindungsgemäßen Schaltungsanordnung abgeleitetes Signal kann ferner nach geeigneter Weiterverarbeitung durch Filter und gegebenenfalls Kombination mit anderen Signalen zur Maskierung der Audiosignale und zur Stereo/Mono-Umschaltung genutzt werden.

Eine Weiterbildung der erfindungsgemäßen Schaltungsanordnung besteht darin, daß daß das empfangene Stereo-Multiplexsignal ferner über ein Tiefpaßfilter geleitet wird und daß das tiefpaßgefilterte Stereo-Multiplexsignal einer Dezimation auf die zweite Abtastrate unterworfen wird. Dadurch eignet sich die erfindungsgemäße Schaltungsanordnung auch zu einer Dezimation der Abtastrate des Stereo-Multiplexsignals im Nutzfrequenzbereich.

Bei einer Ausführungsform dieser Weiterbildung ist vorgesehen, daß das Tiefpaßfilter einen innerhalb des Nutzfrequenzbereichs allmählich abfallenden Frequenzgang aufweist. Ein derartiges Filter weist einen relativ geringen Aufwand auf und genügt geringeren Qualitätsanforderungen bei der anschließenden Verarbeitung des Stereo-Multiplexsignals.

Eine qualitativ hochwertige Verarbeitung ist jedoch dadurch möglich, daß das tiefpaßgefilterte Stereo-Multiplexsignal mit der zweiten Abtastrate ein Filter zur Kompensation des abfallenden Frequenzganges des Tiefpaßfilters durchläuft und daß das Ausgangssignal des Filters zur Kompensation über eine Schaltung zur Störunterdrückung, die von dem Störungen anzeigenden Signal steuerbar ist, einem Stereodecoder zuführbar ist.

Eine vorteilhafte Ausgestaltung der Erfindung besteht darin, daß die erste Abtastrate 456 kHz und die zweite Abtastrate 228 kHz beträgt.

Ein Ausführungsbeispiel der Erfindung ist in der Zeichnung anhand mehrerer Figuren dargestellt und in der nachfolgenden Beschreibung näher erläutert. Es zeigt:
- Fig. 1: ein Ausführungsbeispiel,
- Fig. 2: eine schematische Darstellung der Spektren der in dem Ausführungsbeispiel nach Fig. 1 auftretenden Signale und
- Fig. 3: ein Blockschaltbild eines Rundfunkempfängers mit einer erfindungsgemäßen Schaltungsanordnung.

Gleiche Teile sind in den Figuren mit gleichen Bezugszeichen versehen. Ausführungsbeispiele sowie Teile davon sind zwar als Blockschaltbilder dargestellt. Dieses bedeutet jedoch nicht, daß die erfindungsgemäße Schaltungsanordnung auf eine Realisierung mit Hilfe von einzelnen den Blöcken entsprechenden Schaltungen beschränkt ist. Die erfindungsgemäße Schaltungsanordnung ist vielmehr in besonders vorteilhafter Weise mit Hilfe von hochintegrierten Schaltungen realisierbar. Dabei kann beispielsweise ein digitaler Signalprozessor eingesetzt werden, welcher bei geeigneter Programmierung die im Blockschaltbild dargestellten Verarbeitungsschritte durchführt. Die erfindungsgemäße Schaltungsanordnung kann zusammen mit weiteren Schaltungsanordnungen innerhalb einer integrierten Schaltung wesentliche Teile eines Rundfunkempfängers bilden.

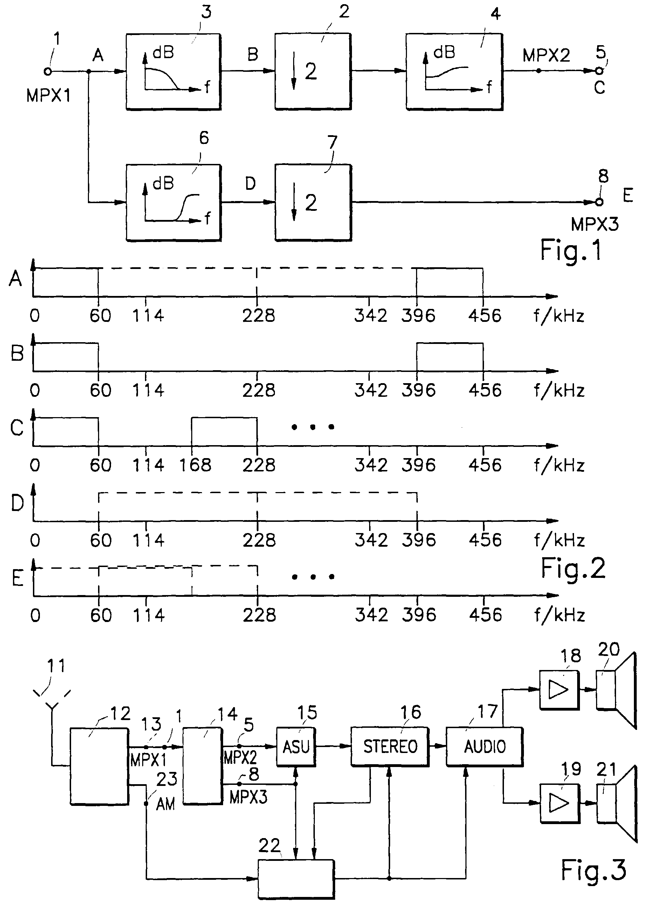

Einem Eingang 1 des Ausführungsbeispiels nach Fig. 1 wird ein digitales Stereo-Multiplexsignal MPX1 zugeleitet, dessen Abtastrate 456 kHz beträgt, was ein ganzzahliges Vielfaches der Trägerfrequenz des Radiodatensignals (57 kHz) ist. Diese hohe Abtastfrequenz erfordert jedoch eine große Anzahl von Rechenoperationen je Sekunde. Bei einem digitalen Rundfunkempfänger ist es deshalb vorteilhaft, mit möglichst geringen Abtastraten zu arbeiten, die an die Bandbreite des jeweiligen Signals angepaßt sind. Deshalb wird das Signal MPX1 bei 2 einer Abtastratenhalbierung unterzogen, wozu zuvor eine Tiefpaßfilterung 3 erforderlich ist. Da jedoch das an sich notwendige Tiefpaßfilter mit einem geradlinigen Frequenzgang über den größten Teil des Durchlaßbereiches und mit einem steilen Abfall im Bereich der oberen Grenzfrequenz sehr aufwendig ist, wird ein Tiefpaßfilter 3 verwendet, das einen allmählichen Abfall aufweist. Ein Kompensationsfilter 4 mit einem entgegengesetzten Frequenzgang hebt jedoch den dadurch entstehenden Fehler wieder auf.

Am Ausgang 5 des Kompensationsfilters 4 steht dann ein Signal MPX2 zur Verfügung, das zur Gewinnung der wiederzugebenden Audiosignale weiterverarbeitet werden kann, wie es beispielsweise später anhand von Fig. 3 erläutert wird.

Zur Gewinnung eines die Spektralanteile oberhalb des Nutzfrequenzbereichs anzeigenden Signals wird das Multiplexsignal MPX1 über ein Hochpaßfilter 6 geleitet und bei 7 ebenfalls einer Abtastratenhalbierung unterzogen. Am Ausgang 8 steht dann das gewünschte die Störungen anzeigende Signal zur Verfügung, welches sich zwar in einem unteren Frequenzbereich befindet, jedoch die Spektralanteile des oberen Frequenzbereichs enthält. Dieses Signal wird im Zusammenhang mit der weiteren Erläuterung der Ausführungsbeispiele der Erfindung mit MPX3 bezeichnet.

Fig. 2 zeigt schematisch die Spektren von Signalen an gleichlautend mit den Zeilen der Fig. 2 bezeichneten Punkten der Schaltungsanordnung nach Fig. 1. Die Darstellung ist insofern stark schematisiert, daß die Amplituden unabhängig vom tatsächlichen Vorhandensein der einzelnen Spektralanteile als konstant angenommen sind.

Zeile A stellt das Spektrum des Signals MPX1 dar, wobei sich im Frequenzbereich von 0 kHz bis 60 kHz das Nutzspektrum des Stereo-Multiplexsignals und - gestrichelt dargestellt - zwischen 60 kHz und 228 kHz ein Störspektrum befinden. Entsprechend gespiegelte Signalanteile befinden sich zwischen 228 kHz und der Abtastfrequenz von 456 kHz. Durch die Filterung bei 3 entsteht das in Zeile B dargestellte Spektrum. Durch die Dezimation bei 2 wird der Bereich zwischen 396 kHz und 456 kHz (Zeile C) in den Bereich zwischen 168 kHz und 228 kHz verschoben.

Durch die Hochpaßfilterung des Signals MPX1 bei 6 entsteht das in Zeile D dargestellte Signal, das lediglich das Störspektrum enthält. Das nach der Dezimation bei 7 vorhandene Spektrum ist aus Zeile E der Fig. 2 ersichtlich. Das zugehörige Signal MPX3 enthält innerhalb des Frequenzbereichs von 0 kHz bis 228 kHz nur Störungen anzeigende Komponenten des Signals MPX1.

Fig. 3 zeigt wesentliche Teile eines Rundfunkempfängers, insbesondere solche Teile, die zur Erläuterung der Anwendung der erfindungsgemäßen Schaltungsanordnung innerhalb eines Rundfunkempfängers erforderlich sind. Das über eine Antenne 11 empfangene Signal wird in einem Empfangsteil (Tuner) 12 in an sich bekannter Weise verstärkt, selektiert und demoduliert. Von einem Ausgang 13 des Empfangsteils 12 wird das Stereo-Multiplexsignal MPX1 dem Eingang 1 einer erfindungsgemäßen Schaltungsanordnung 14 zugeleitet. Dem Ausgang 5 der erfindungsgemäßen Schaltungsanordnung 14 wird das Stereo-Multiplexsignal MPX2 entnommen und über eine Schaltung 15 zur automatischen Störunterdrückung einem Stereodecoder 16 zugeleitet, an den sich ein Audioprozessor 17 anschließt. Ausgänge des Audioprozessors sind dann an NF-Verstärker 18, 19 angeschlossen, welche Lautsprecher 20, 21 steuern.

Das von der erfindungsgemäßen Schaltungsanordnung 14 abgeleitete Störungen anzeigende Signal MPX3 wird über den Ausgang 8 einem Steuereingang der Schaltung 15 zugeführt. Dort werden, wie bereits beschrieben, im Falle von Störungen gestörte Abtastwerte durch zuvor empfangene richtige Abtastwerte innerhalb des Stereo-Multiplexsignals ersetzt.

Eine derartige Schaltung ist in der deutschen Patentanmeldung P 43 30 892.9 der Anmelderin beschrieben.

Das Signal MPX3 gelangt ferner zu einer Schaltung 22 zur Ableitung von Signalen, welche die Empfangsqualität wiedergeben. Dieser Schaltung wird außerdem von einem Ausgang 23 des Empfangsteils 12 ein Signal AM zugeführt, das durch Amplitudendemodulation des FM-Zwischenfrequenzsignals entstanden ist. Außerdem erhält die Schaltung 22 vom Stereodecoder 16 Signale, welche die Symmetrie der Seitenbänder des modulierten Hilfsträgers bezeichnen. Aus diesen Signalen formt die Schaltung 22 ein die Empfangsqualität bezeichnendes Signal, das bei dem in Fig. 3 dargestellten Rundfunkempfänger zur Steuerung der Stereo/Mono-Umschaltung dem Stereodecoder 16 und zur vorübergehenden Lautstärkeverminderung dem Audioprozessor 17 zugeleitet wird. Einzelheiten einer Schaltung 22 sind in der deutschen Patentanmeldung P 43 09 518.6 der Anmelderin erläutert.

## Patentansprüche

1. Schaltungsanordnung zur Ableitung eines Störungen in einem empfangenen Stereo-Multiplexsignal anzeigenden Signals, wobei das Stereo-Multiplexsignal als digitales Signal mit einer ersten Abtastrate vorliegt, welche wesentlich größer als das Doppelte der oberen Grenze des Nutzfrequenzbereichs des Stereo-Multiplexsignals ist, dadurch gekennzeichnet, daß das empfangene Stereo-Multiplexsignal über ein Hochpaßfilter (6) geleitet wird und daß das hochpaßgefilterte Stereo-Multiplexsignal einer Dezimation (7) auf eine zweite Abtastrate unterworfen wird, die größer als das Doppelte der oberen Grenze des Nutzfrequenzbereichs des Stereo-Multiplexsignals ist.

2. Schaltungsanordnung nach Anspruch 1, dadurch gekennzeichnet, daß das empfangene Stereo-Multiplexsignal ferner über ein Tiefpaßfilter (3) geleitet wird und daß das tiefpaßgefilterte Stereo-Multiplexsignal einer Dezimation (2) auf die zweite Abtastrate unterworfen wird.

3. Schaltungsanordnung nach Anspruch 2, dadurch gekennzeichnet, daß das Tiefpaßfilter (3) einen innerhalb des Nutzfrequenzbereichs allmählich abfallenden Frequenzgang aufweist.

4. Schaltungsanordnung nach Anspruch 3, dadurch gekennzeichnet, daß das tiefpaßgefilterte Stereo-Multiplexsignal mit der zweiten Abtastrate ein Filter (4) zur Kompensation des abfallenden Frequenzganges des Tiefpaßfilters (3) durchläuft und daß das Ausgangssignal des Filters (4) zur Kompensation über eine Schaltung (15) zur Störunterdrückung, die von dem Störungen anzeigenden Signal steuerbar ist, einem Stereodecoder (16) zuführbar ist.

5. Schaltungsanordnung nach einem der vorhergehenden Ansprüche, dadurch gekennzeichnet, daß die erste Abtastrate 456 kHz und die zweite Abtastrate 228 kHz beträgt.

## Claims

1. Circuit arrangement for deriving a signal which indicates interference in a received stereo multiplex signal, the stereo multiplex signal being present as a digital signal with a first sampling rate, which is significantly greater than twice the upper limit of the useful frequency range of the stereo multiplex signal, characterized in that the received stereo multiplex signal is conducted via a high-pass filter (6) and in that the high-pass-filtered stereo multiplex signal is subjected to a decimation (7) to a second sampling rate, which is greater than twice the upper limit of the useful frequency range of the stereo multiplex signal.

2. Circuit arrangement according to Claim 1, characterized in that the received stereo multiplex signal is furthermore conducted via a low-pass filter (3), and in that the low-pass-filtered stereo multiplex signal is subjected to a decimation (2) to the second sampling rate.

3. Circuit arrangement according to Claim 2, characterized in that the low-pass filter (3) has a frequency response that falls gradually within the useful frequency range.

4. Circuit arrangement according to Claim 3, characterized in that the low-pass-filtered stereo multiplex signal with the second sampling rate passes through a filter (4) in order to compensate for the falling frequency response of the low-pass filter (3), and in that the output signal of the filter (4) can be fed, for the purpose of compensation, via a circuit (15) for interference suppression, which can be controlled by the signal which indicates interference, to a stereo decoder (16).

5. Circuit arrangement according to one of the preceding claims, characterized in that the first sampling rate is 456 kHz and the second sampling rate is 228 kHz.

## Revendications

1. Circuit de dérivation d'un signal indicateur des perturbations d'un signal multiplex stéréo reçu, dans lequel le signal multiplex stéréo existe sous la forme d'un signal numérique avec un premier taux de détection, ce taux étant supérieur au double de la limite supérieure de la plage de fréquences utiles du signal multiplex stéréo, caractérisé en ce que
• le signal multiplex stéréo reçu est conduit à travers un filtre passe-haut (6), et
• le signal multiplex stéréo, filtré par un filtre passehaut, est soumis à une décimation (7) sur le second taux de détection, supérieure au double de la limite supérieure de la plage de fréquences utiles du signal multiplex stéréo.

2. Circuit selon la revendication 1,
caractérisé en ce que
• le signal multiplex stéréo reçu alimente en outre un filtre passe-bas (3), et
• le signal multiplex stéréo, filtré par le filtre passebas, est soumis à une décimation (2) pour arriver à un second taux de détection.

3. Circuit selon la revendication 2,
caractérisé en ce que
le filtre passe-bas (3) présente une courbe de fréquences progressivement décroissante dans la plage des fréquences utiles.

4. Circuit selon la revendication 3,
caractérisé en ce que
• le signal multiplex stéréo sortant du filtre passe-bas traverse, avec un second taux de détection, un filtre (4) pour compenser la courbe de fréquence décroissante du filtre passe-bas (3), et
• le signal de sortie du filtre (4) est appliqué à un décodeur stéréo (16) pour la compensation par l'intermédiaire d'un circuit (15) destiné à supprimer des perturbations, ce circuit se commandant à l'aide d'un signal indiquant les perturbations.

5. Circuit selon l'une des revendications précédentes,
caractérisé en ce que
le premier taux de détection est égal à 456 kHz et le second taux de détection est égal à 228 kHz.
